Europäisches Patentamt

(19) **European Patent Office**

**Office européen des brevets**

(11) Publication number: **0 108 605**
**A2**

# (12) EUROPEAN PATENT APPLICATION

(21) Application number: **83306664.0**

(22) Date of filing: **02.11.83**

(51) Int. Cl.³: **G 01 N 15/02**
**G 01 N 33/18**

(30) Priority: **09.11.82 GB 8231921**
**26.07.83 GB 8320080**

(43) Date of publication of application:
**16.05.84 Bulletin 84/20**

(84) Designated Contracting States:
**AT BE CH DE FR GB IT LI NL SE**

(71) Applicant: **UNIVERSITY COLLEGE LONDON**
**Gower Street**
**London WC1E 6BT(GB)**

(72) Inventor: **Gregory, John**
**15 Birch Drive**
**Hatfield Hertfordshire(GB)**

(72) Inventor: **Nelson, David William**
**35 Lee Street**
**Horley Surrey(GB)**

(74) Representative: **Boon, Graham Anthony et al,**
**Elkington and Fife High Holborn House 52/54 High**
**Holborn**
**London, WC1V 6SH(GB)**

(54) Apparatus for detecting particles and changes in particle size in a suspension.

(57) An apparatus is disclosed for detecting particles and changes in particle size, for example as a result of flocculation, in a suspension of particles in a fluid medium. The apparatus comprises means (6) for directing a beam of light at the suspension, a detector (7) for detecting light emerging from the suspension and producing an output signal in response thereto, and means (8) for generating from the output signal of the detector (7) a signal representing the power of the fluctuating component of the said output signal of the detector (7) or a function of that power.

Fig.1

1.

Apparatus for detecting particles
and changes in particle size in a
suspension.

This invention relates to an apparatus for
detecting particles in a suspension, and changes in
particle size. In one particular form of the invention
the apparatus is designed to detect the effect of
introducing a flocculant into a suspension of particles
in a fluid medium, for example in an aqueous medium.

Flocculants are widely used in the treatment
of suspensions, for example in the treatment of water
supplies. A raw water typically contains particles
which it is desirable to remove before the water is
supplied to a user, and such particles can only be
caused to settle out, or at least only to settle out
in a reasonable period of time, if the size of the
particles is increased by flocculation. For this
purpose a flocculant, for example aluminium sulphate,
is introduced into the water. It is important to know
the optimum amount of flocculant required for a particular raw water being treated, and accordingly it is
usual to carry out tests on the water, using varying
amounts of flocculant, in order to determine the
optimum dosage. The normal method of carrying out
these tests is by the so-called jar test procedure.
This involves putting a sample of the water to be
tested in each of a number of beakers, for example
six beakers, and adding to each beaker a different
dose of a flocculant. After the flocculant has been
added, the contents of the beakers are stirred rapidly
for a short period of time, for example half a minute,
followed by a slow stirring for a longer period of time,
for example 10 to 15 minutes. The flocs thus formed

2.

are allowed to settle for a predetermined period of time, following which the partially clarified water thus produced in the beakers is assessed for clarity by an optical turbidity testing method. The results obtained by testing the samples of partially clarified water give a measure of which dose of flocculant was most effective.

However, the jar test procedure has a number of disadvantages. Firstly, it is very slow. A given jar test takes a considerable length of time to carry out, and a number of such tests may be needed before the optimum chemical conditions and quantity of flocculant is determined. The whole procedure can easily take a complete day to carry out. Furthermore, using the jar test procedure requires a considerable volume of water. This may not be a problem where the jar tests are carried out on site, but can be a problem where they are carried out in a laboratory remote from the site.

Accordingly, alternative methods of testing flocculants have been proposed. One such method is described in a paper entitled "Laser Optical Method for Dynamic Flocculation Testing in Flowing Dispersions" by Ditter, Eisenlauer and Horn which appeared in "The Effect of Polymers on Dispersion Properties" (T.F. Tadros, Ed) pp 323-342, Academic Press, 1982. In this method a laser beam is focussed on a suspension passing through a flowthrough cell, the diameter of the focus being typically of the order of 10 microns. Laser light passing through the cell is detected by a photodetector which produces a fluctuating signal as a result. The data from the fluctuating signal is evaluated by means of a pulse-height analyser, and the results of the analysis are punched on paper tape for further computer evaluation, which gives a measure of

0108605

3.

the degree of flocculation. It will be understood that this method is elaborate and that the use of off-line computer evaluation necessarily reduces the speed of operation.

According to the present invention there is provided an apparatus for detecting particles and changes in particle size in a suspension of particles in a fluid medium, comprising means for directing a beam of light at the suspension, a detector for detecting light emerging from the suspension and producing an output signal in response thereto, and means for generating from the said output signal of the detector a signal representing the power of the fluctuating component of the said output signal of the detector or a function of the said power.

In a particular embodiment of the invention, applied to testing the effect of a flocculant, the apparatus further comprises a tube through which, in use, the suspension flows and is subjected to shear, and means for introducing into the suspension, upstream of the said tube, a selected dose of flocculant, the aforesaid means for directing a beam of light at the suspension and detector being positioned downstream of the said tube.

In the accompanying drawings:

Figure 1 shows schematically an embodiment of the present invention, as applied to testing the effect of a flocculant;

Figure 2 is a graph showing the signal produced by the detector used in Figure 1;

Figure 3 is a graph showing the R.M.S. signal value plotted against a function of kaolin concentration;

4.

Figure 4c to 4e illustrate different forms of particle aggregation; ·and

Figure 5 is a graph showing the R.M.S. signal value as a function of time for various flocculants.

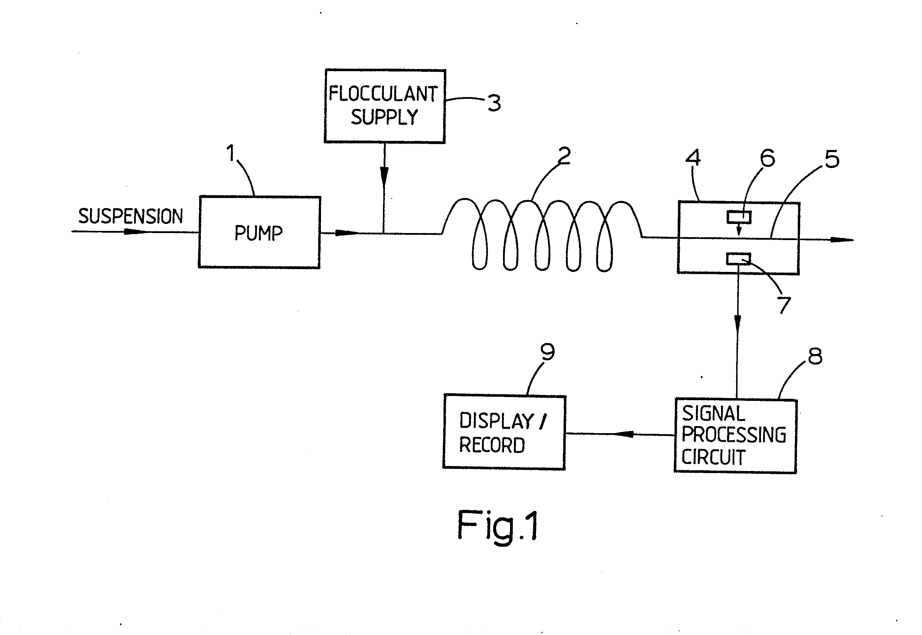

In the embodiment illustrated in Figure 1 a suspension of particles in a fluid medium, e.g. water, is pumped by a pump 1 into and through a coil tube 2. Before the suspension enters the tube 2 a selected dose of flocculant is introduced into the suspension from a flocculant supply 3. In one embodiment of the invention flocculant is introduced as a predetermined number of unit doses, i.e. one unit dose, two unit doses, three unit doses and so forth. Alternatively, however, an arrangement might be used in which the flow of suspension from the pump 1 merges with a flow of flocculant from the supply 3, the ratio of suspension to flocculant being controlled in some appropriate way.

In the coiled tube 2 the suspension is subject to shear which tends to produce flocculation. It is known that, to a reasonable degree of approximation, the extent of flocculation occurring in a tube is proportional to the value of $L/R$, where $L$ is the length of the tube and $R$ is its radius (see Gregory, Chem. Eng. Sci. 36, 1789, 1981). Accordingly, it is desirable, with a view to producing a reasonable amount of flocculation without needing an excessive quantity of liquid, for the tube to be of a diameter as small as is compatible with the need to avoid its becoming clogged by particles in the suspension.

After emerging from the downstream end of the coiled tube 2 the suspension flows through a cell 4. In this cell the tube 5 through which the suspension flows is transparent, and may, for example, be a glass tube of 1mm internal diameter. At this stage the

5.

suspension may contain flocs of about 20 to 30 microns in size, although this depends on the concentration of particles in the suspension, the nature and dose of the flocculant and the flow rate through the tube. A narrow beam of light is transmitted through the tube 5 from a light source 6. A convenient light source is a GaAlAs light emitting diode, which emits an infrared beam of wavelength 820nm whose half-power width is approximately 100 microns. The detector can be a photodiode with a peak response at about the same wavelength as the light emitting diode.

The volume of suspension illuminated is of the order of $0.02 \text{ mm}^3$, so that for a typical suspension concentration of $10^8$ particles per $\text{cm}^3$ there would be, on average, about 2000 particles in the light beam. Because there are inevitable local fluctuations in particle concentration and the illuminated sample is continually being renewed by flow of suspension through the tube 5, the actual number of particles in the beam shows random variation about the mean value. This leads to random fluctuations in transmitted light intensity, and the present invention is based on the measurement of these fluctuations.

It is worth emphasising that this method is quite different from the transmitted light method of Ditter et al referred to above. In that method, a very much smaller sample volume is illuminated, using a laser beam. Essentially, single particle events are monitored and processed by pulse height analysis. In the present invention, in contrast, a substantial number of particles can be simultaneously present in the sensing zone and a different method is used for processing the fluctuating signal.

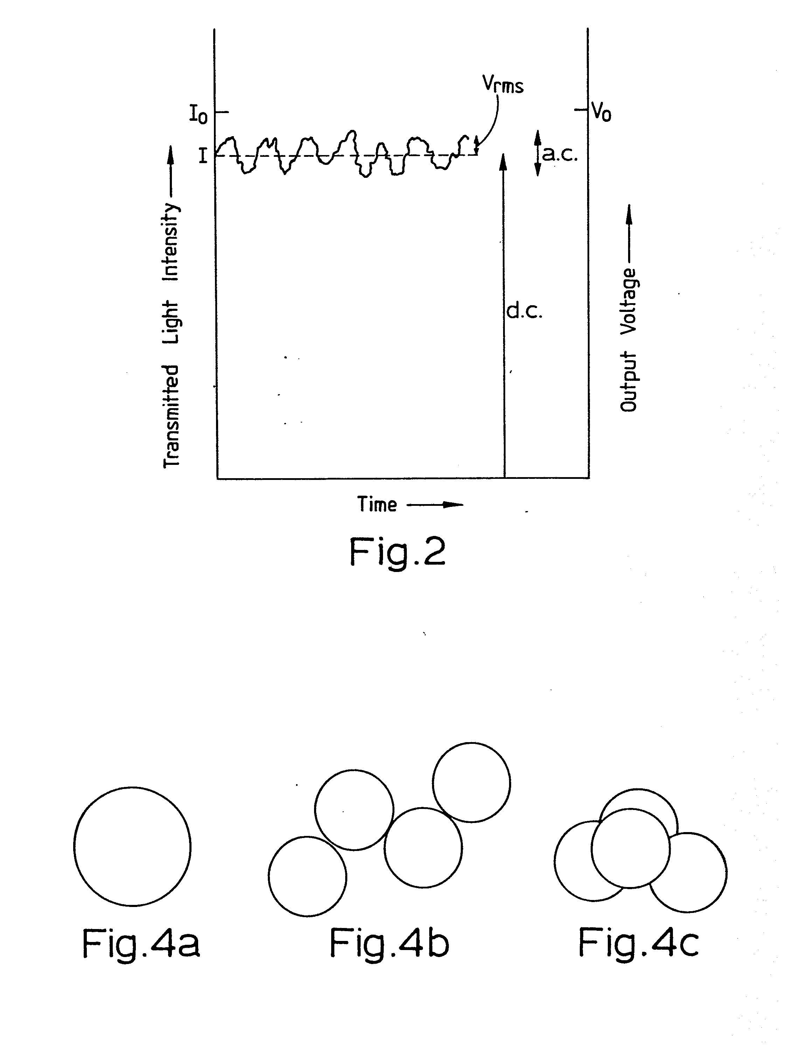

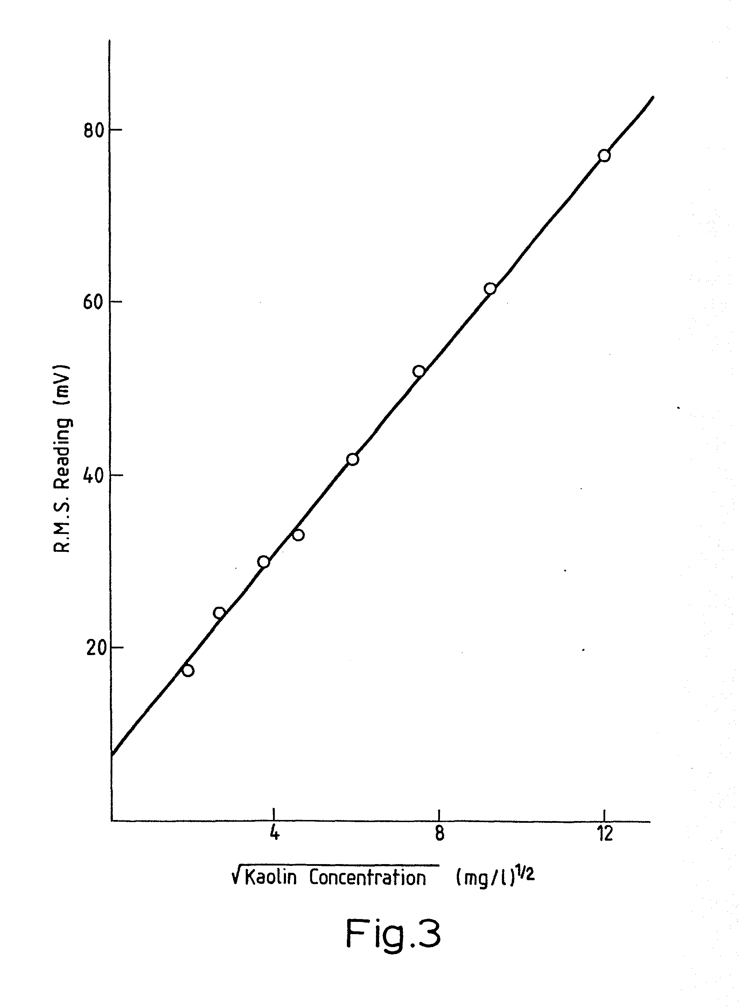

A certain portion of the light passing through the tube is absorbed or scattered, and the remaining portion of the light is detected by a photodetector 7 matched to the light source 6. The photodetector

6.

produces an output signal voltage which contains a large d.c. component, corresponding to the average transmitted light intensity, together with a small fluctuating or a.c. component which is due, apart from the effect of noise, to the passage of particles through the beam of light. This is shown in Figure 2. Such fluctuations increase markedly as flocculation occurs, well before the flocs reach a size where they would be visible to the unaided eye or would settle out at an appreciable rate. This is discussed further below.

The output signal from the detector 7 is passed to a signal processing circuit 8. In the circuit 8 the d.c. component is eliminated, for example by passing the signal through a suitable capacitor, and the a.c. component is then amplified and analysed. The simplest measure of a fluctuating signal is its root mean square (R.M.S.) value, which is related to the power of the signal. Thus, the circuit 8 preferably comprises an R.M.S.-to-d.c. converter, which gives a d.c. output proportional to the R.M.S. value of the input waveform. The output from the circuit 8 is passed to a device 9 where it is displayed on a digital voltmeter or chart recorder, or digitised and processed by an on-line microcomputer.

The fluctuating signal has a characteristic frequency which is related to the transit time of the particles through the light beam. This time depends on the flow rate through the tube. For example, in the case of a flow rate of the order of 5-10 $cm^3$/min, the transit time is about 1-2 ms and the above mentioned frequency is a few hundred Hz. The measured R.M.S. value should not depend on the frequency and so should be independent of flow rate.

It is well known that local variations in

7.

composition of a suspension follow the Poisson distribution, so that the standard deviation about the mean is equal to the square root of the average value. Thus, in the example mentioned previously, the number of particles in the beam would mostly be in the range $2000 \pm 45$. The standard deviation is equivalent to the root means square variation about the mean and can be related to the R.M.S. intensity measurement, as shown below.

The intensity, I, of light transmitted through a suspension of particles is given by:

$$I \ = \ I_O \exp(-NKl) \qquad (1)$$

where $I_O$ is the intensity of the incident beam (i.e. that transmitted through particle-free water), N is the number of particles per unit volume, K is the average scattering cross-section of the particles and l is the optical path length.

For present purposes, it is more convenient to express the result in terms of the number of particles in the beam, n, rather than the number per unit volume, N. If the beam has an effective cross-sectional area A, then the volume of suspension illuminated is lA and the number of particles in this volume is simply given by $n = NlA$.

Eq(1) can then be re-written:

$$I \ = \ I_O \exp(-nK/A) \qquad (2)$$

For dilute suspensions, only a small fraction of the light is scattered, so that $I/I_O \simeq 1$ and $nK/A \ll 1$. The exponential term can then be replaced by its linear approximation, giving:

8.

$$I \simeq I_o(1 - nK/A) \qquad (3)$$

In the method described above, the R.M.S. value of the intensity fluctuations is measured, which arises from random fluctuations in the number of particles in the beam. Since the R.M.S. value of the number fluctuations (or the standard deviation about the mean) is $\sqrt{n}$ (assuming a Poisson distribution) it follows that:

$$V_{rms} \simeq V_o n^{\frac{1}{2}}K/A \qquad (4)$$

Since the intensities are measured as voltages, equation (4) has been written in terms of the R.M.S. voltage for the flowing suspension, $V_{rms}$, and the d.c. voltage corresponding to the incident light intensity, $V_o$ (see Figure 2).

For given experimental conditions, where the effective area and incident intensity of the light beam are constant, the measured R.M.S. value should depend on the square root of the average number of particles in the beam and on their scattering cross-section K. When only the concentration of particles is changed, the R.M.S. value should depend on the square root of the concentration.

Figure 3 shows measured R.M.S. values derived from an experiment using a series of kaolin suspensions ranging in concentration from 3-140 mg/l. The R.M.S. value gives a very good straight line when plotted against the square root of the kaolin concentration, confirming the validity of equation (4), and the underlying assumption of Poisson statistics. Since the

9.

kaolin particles have a range of sizes up to about 2 μm, it is clear that the foregoing analysis is not restricted to uniform particles. The line in Figure 3 does not pass through the origin and there is a small R.M.S. reading at zero kaolin concentration. This is due to the presence of particles in the laboratory deionised water which was used to make up the suspension.

The linear behaviour in Figure 3 is not observed at much higher kaolin concentrations; in fact, the R.M.S. value passes through a maximum. This is a consequence of the exponential form of equation (2) and it can be shown that the maximum occurs when the total scattering cross-section of the particles is half the cross-sectional area of the beam (i.e. $nK/A = 0.5$).

Provided that the reduction in light transmission by the particles is quite small and that the approximation in equation (3) is valid, then the linear behaviour shown in Figure 3 should be observed. In practice, this covers most suspensions of interest up to concentrations of at least 100 mg/l, in a 1 mm cell.

The simplicity of the R.M.S. measurement and its sensitivity to quite low concentrations makes the technique attractive as a means of monitoring the level of suspended solids in water. One very significant advantage over traditional flow-through turbidity measurements is the virtual absence of problems due to fouling of the tube walls and electronic drift. Both of these predominantly affect the d.c. component of the transmitted light and have very little influence on the R.M.S. value of the fluctuations.

Because there are pronounced effects on the R.M.S. value caused by changes in the state of aggre-

10.

gation of particles, it may not be possible to interpret the results unambiguously in terms of suspended solids concentration. However, this sensitivity to aggregation makes the R.M.S. measurement very useful in monitoring flocculation, as will now be shown.

Consider, for simplicity, a suspension of monodisperse, spherical particles of radius a, at a concentration giving, on average, n particles in the light beam. Then, for dilute suspensions, the R.M.S. value is given by equation (4). In principle, the scattering cross-section K could be calculated from light scattering theory, but this is difficult except in certain limiting cases. If the particles are very small (so that the radius is very much less than the light wavelength), then Rayleigh theory can be applied. However, for the particles we are concerned with, especially aggregates, this would not be a realistic approach. For much larger particles a simple diffraction approach becomes acceptable and the scattering cross-section is then just twice the geometric cross-sectional area of a particle. Intermediate particle sizes require application of the much more elaborate Mie theory.

For illustrative purposes, it will be assumed that the particles are large enough (a few $\mu$m) for the diffraction or 'light blockage' approach to be valid, in which case:

$$K = 2 \pi a^2 \qquad\qquad (5)$$

When particles aggregate, the R.M.S. value should change for two reasons:

a)      The number concentration decreases.

b)      The scattering cross-section increases.

These have opposite effects on the R.M.S. value,

11.

but it can be shown that, in virtually all cases of practical interest, the .net effect is a substantial increase in fluctuations and hence in the measured R.M.S. value.

Light scattering by aggregates is very difficult to predict, not the least of the problems being the need to define the form of the aggregate. The simplest assumption is that the particles comprising the aggregate coalesce to form a sphere of the same total volume, in which case the calculation is quite straightforward. However, this is a very unrealistic assumption and 'real' aggregates must be considered. For fairly small spherical particles, it can be shown that 'real' doublets scatter less light than the equivalent coalesced sphere, but the opposite effect is expected for larger particles. On a simple light-blockage picture, it seems intuitively obvious that a 'real' aggregate would block more light than a sphere of the same total volume, since the latter presents less cross-sectional area to the beam. In the present device, where aggregates flow through a capillary tube, it is probable that chain-like aggregates would tend to align with the flow and hence block more light than randomly-oriented aggregates. The concepts are illustrated schematically in Figures 4a to 4c, which show respectively coalesced spheres, an extended aggregate (aligned by flow), and a randomly oriented aggregate.

Unless great care is taken to ensure a narrow light acceptance angle at the photodiode, some forward-scattered light must be detected. This considerably complicates the interpretation of transmitted light measurements and tends to reduce the effect of aggregation on measured extinctions. It seems reasonable to treat K as an 'effective' scattering cross-section;

12.

which includes both extinction and forward scattering.

The effect of aggregation on the R.M.S. value will be estimated for two extreme cases:  a) coalescence and b) extended aggregates in which all of the cross-sectional area of the individual particles is presented to the light beam.  The simple diffraction result, equation (5) will be used.

Suppose that the particles from j-fold aggregates (i.e. on average, j single particles combine to form one aggregate).  In that case, the average number of particles in the beam will be reduced to $(n/j)$ and the scattering cross-section will be, for the two cases above:

a)      $K = 2j^{2/3}\pi a^2$      (coalescence)

b)      $K = 2j \pi a^2$   (extended aggregate)

The R.M.S. values, from equation (4), can then be calculated for the two cases, by inserting the appropriate value of K and replacing $n^{1/2}$ by $(n/j)^{1/2}$.  The results are:

a)      $V_{rms} = [2\pi aV_o n^{1/2}/A]j^{\frac{1}{6}}$      (6)

b)      $V_{rms} = [2\pi aV_o n^{1/2}/A]j^{1/2}$      (7)

The terms in square brackets are identical and depend on experimental conditions and the properties of the initial suspension.  During flocculation these terms remain constant and the measured R.M.S. value should vary as either the sixth root or the square root of the aggregation number, j, depending on whether coalesced spheres or extended aggregates are assumed.  In practice, behaviour intermediate between these two extremes would be expected, although probably nearer to equation (7).  For 60-fold aggregates the R.M.S. value should increase by a factor of between about 2

13.

and 8 depending on the nature of the aggregates.

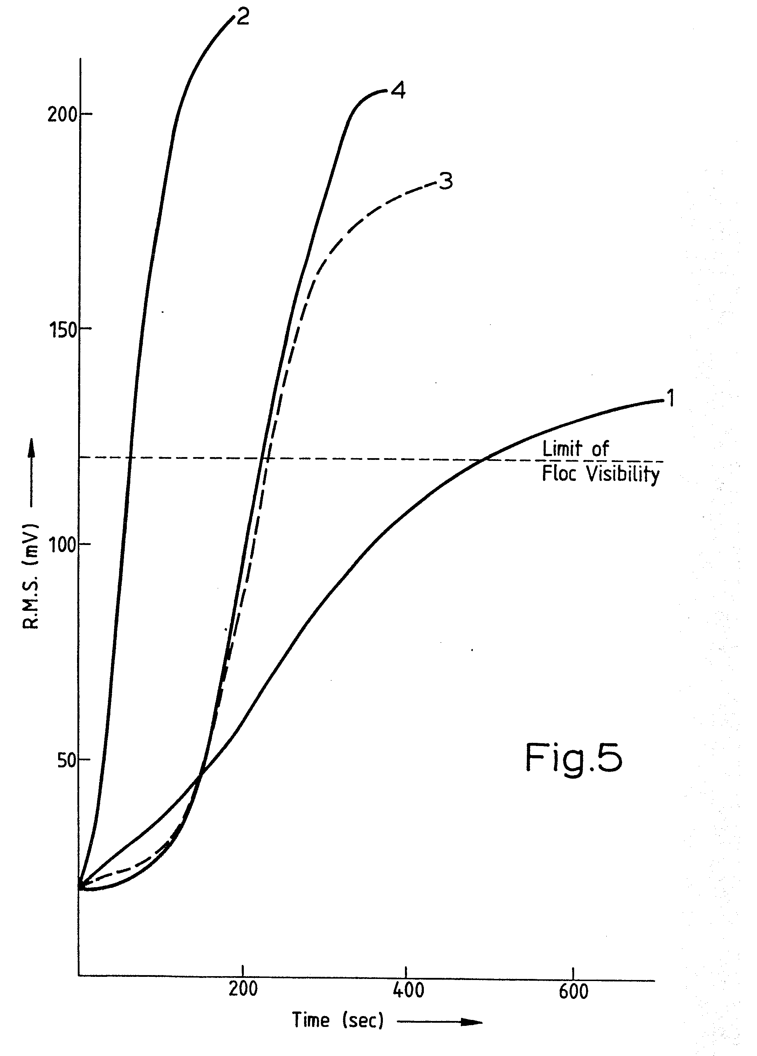

Some observations of changes in R.M.S. value during flocculation of kaolin suspensions are presented in Figure 5, which shows the effect of four flocculants each represented by one of the traces (1), (2), (3) and (4).

In these tests, the kaolin concentration was fixed at 35 mg/l and flocculation was carried out under conditions of low-speed magnetic stirring. The suspension flowed by gravity from the flocculation vessel through a short length of tubing to the capillary flow cell, where the fluctuations in transmitted light intensity were monitored continuously. The flow rate was about 5 $cm^3$/min and the lag time between the flocculation vessel and the measurement cell was small (2-3 sec), so that any aggregation of particles was detected almost immediately as a change in R.M.S. value. Flocculants were rapidly pipetted into the stirred kaolin suspensions and the R.M.S. value was displayed on a chart recorder.

The four different flocculants used, each at one concentration (chosen to be within the optimum range for the particular additive) were:

1)      Calcium nitrate at a concentration of $10^{-2}$M.

2)      Aluminium sulphate at a concentration of $4 \times 10^{-5}$M (about 2.2 mg/l as Al).

3)      A low molecular weight cationic polymer, poly(dimethylaminoethylmethacrylate), with a molecular weight of about 5000 and fully quaternised. The concentration was 0.1 mg/l.

4)      A high molecular weight cationic polymer, poly(1-ethyl-2-methyl 5-vinyl pyridinium bromide) molecular weight about 1 million, at a concentration of 0.1 mg/l.

14.

In the case of the cationic polymers the kaolin suspension was made up in $10^{-3}$M NaCl, to control the ionic strength, which is known to influence flocculation by cationic polymers. For aluminium sulphate, the kaolin was suspended in London tap water diluted with an equal volume of deionised water, to give sufficient alkalinity and optimum pH for hydroxide precipitation.

The present invention thus provides a very sensitive means of following the flocculation process and clearly shows up the different behaviour of various flocculants. All of the results in Figure 5 were obtained under similar conditions, so that useful comparisons can be made. The stirring speed was constant (about 50 r.p.m.) and the instrument settings were such that the R.M.S. reading for the unflocculated kaolin was 20 mV and could rise to about 200 mV for flocculated samples. As indicated in Figure 5, flocs just visible to the unaided eye gave R.M.S. values of about 120 mV, i.e. six-fold rise from the unflocculated suspension.

With calcium nitrate, the negatively-charged kaolin particles are destabilised by a reduction in double layer repulsion. The R.M.S. value rises steadily after addition of the salt and reaches a limiting value of about 140 mV, indicating that a limiting floc size has been attained in the stirred suspension. It is well known that flocs grow to a limiting size in sheared suspensions, as a result of a competition between floc growth and break-up. With simple salts, such as calcium salts, floc strength is not very great.

Cationic polymers are effective with negative particles either because of a bridging mechanism or as a result of charge neutralisation. With the kaolin suspension, they clearly give very different behaviour

15.

to that observed with a calcium salt. The R.M.S. value rises much more rapdily and reaches higher limiting values, indicating larger floc sizes and hence stronger flocs. The fact that the two polymers give rather similar behaviour, despite a large difference in molecular weight, indicates that polymer bridging is not of major significance in this case. The slight differences between the two polymers might be explained in terms of 'electrostatic patch' effects. There is some evidence, especially with the higher molecular weight polymer, of a short time lag (50 - 100 seconds) between addition of the flocculant and the onset of rapid flocculation, probably due to the relatively slow adsorption of polymers in a stirred suspension.

The behaviour with aluminium sulphate is quite unlike the other cases. The R.M.S. value rises at an extremely rapid rate immediately after dosing and reaches a limiting value after only about two minutes. Precipitation of aluminium hydroxide occurs under these experimental conditions (and in water treatment practice), giving an increase in the amount of suspended material as well as flocculation of the clay particles, both of which should increase the R.M.S. reading.

In carrying out a test to determine the optimum amount of flocculant the suspension is successively dosed with different quantities of flocculant. Each dose produces in the suspension passing through a cell 4 a given degree of flocculation which is displayed and/or recorded by the device 9. The person carrying out the test can quite rapidly see which dose of flocculant produces the highest degree of flocculation, this being represented by the highest value for the power-representing signal generated at the output of the circuit 8.

It should be noted that instead of using the actual value of the R.M.S. power it is possible instead to use some function of that power, for example the first or a higher derivative thereof.

It should also be noted that the present invention can be used for purposes other than that specifically described in relation to the drawing. For example, in the field of flocculation the invention can be used to test the strength of flocs, by subjecting flocs to varying degrees of shear and then determining the resulting degree of flocculation, having regard to the fact that although, up to a point, shear tends to produce flocculation, excessive shear will, as mentioned above, cause flocs to disintegrate.

It is also possible to use the present invention in fields other than those involving flocculation. The invention can be used quite generally to detect the presence or formation of particles in a fluid medium, or the dispersion and disaggregation of particles in fluids. For example, the invention may be used to detect the degree of crystallisation of a solution, for example in the production of a particulate material (e.g. sugar) from a solution thereof.

The output of the detector can be used in the monitoring and control, for example on-line control, of processes involving changes in particle concentration or particle size distribution.

In the apparatus described above the detector measures the intensity of light transmitted through the suspension. However, it is to be understood that the principle of the present invention can also be applied to an apparatus in which the detector measures the intensity of light which has been scattered from the suspension. This is particularly advantageous where there is a high density of particles in the suspension so that a relatively small amount of light is transmitted therethrough. The scattering concerned can be back-scattering or scattering in some other direction.

CLAIMS:

1.    An apparatus for detecting particles and changes
in particle size in a suspension of particles in a fluid
medium, comprising means for directing a beam of light
at the suspension, a detector for detecting light emerging
from the suspension and producing an output signal in
response thereto, and means for generating from the said
output signal of the detector a signal representing the
power of the fluctuating component of the said output
signal of the detector or a function of the said power.

2.    An apparatus according to claim 1, further comprising
means for introducing a flocculant into the said suspension
to form a mixture thereof.

3.    An apparatus according to claim 2, wherein the
flocculant introducing means is a unit dosing device.

4.    An apparatus according to claim 2, wherein the
flocculant introducing.means comprises means for merging
flows of suspension and flocculant in a variable ratio.

5.    An apparatus according to any one of claims 2 to 4,
comprising shearing means for subjecting the mixture of
flocculant and suspension to shear forces.

6.    An apparatus according to claim 5, wherein the shearing means is a tube.

7.    An apparatus according to any preceding claim,
comprising means defining a flow path for the suspension,
which flow path passes the detector.

8.    An apparatus according to any preceding claim,
wherein the detector detects light scattered from the
suspension.

9. An apparatus according to any one of claims 1 to 7, wherein the detector detects light transmitted through the suspension.

10. An arrangement comprising a detecting apparatus according to any preceding claim in combination with equipment for carrying out a process involving changes in the concentration or size distribution of particles in a fluid medium.

11. An arrangement according to claim 10, in which the detecting apparatus is arranged to effect on-line control of the said process.

Fig.1

Fig.2

Fig.4a

Fig.4b

Fig.4c

Fig.3

Fig.5